# EUROPEAN PATENT SPECIFICATION

(11) **EP 1 271 950 B1**
(45) Date of publication and mention of the grant of the patent: **13.08.2008**
(21) Application number: 02252701.4
(22) Date of filing: 16.04.2002
(51) Int. Cl.: H04N 7/15, H04N 5/00

(54) **Moving images synchronization system**
System zur Synchronisation von Video-Bilder
Système de synchronisation pour images video

(30) Priority: 24.04.2001 JP 2001126080
(43) Date of publication of application: 02.01.2003
(73) Proprietor: FUJITSU LIMITED, Kawasaki-shi, Kanagawa 211-8588 (JP)
(72) Inventor: Nakagawa, Kenichi, c/o Fujitsu Hokuriku, Kanazawa-shi, Ishikawa 921-8611 (JP); Katada, Keisuke, c/o Fujitsu Hokuriku, Kanazawa-shi, Ishikawa 921-8611 (JP)
(74) Representative: Fenlon, Christine Lesley

(56) References cited:
- WO-A-01/02939
- WO-A-99/46702
- WO-A-99/59337
- US-B1- 6 212 547

## Description

The present invention relates to a moving images synchronization system which controls computers to display moving images such as video contents in synchronization with one another. The present disclosure relates to subject matter contained in Japanese Patent application No. 2001-126080 (filed on April 24, 2001).

An art is known which controls computers to display moving images in synchronization with something. For example, a system is operational which makes a computer display the same images displayed on a screen of another computer. This system comprises distributing and receiving computers. The distributing computer displays moving images on the screen, and scans the screen images to send them to the receiving computer. The receiving computer, by receiving the sent images, can display on its screen the same moving images which are displayed on the screen of the distributing computer. That is, among the plural computers the moving images are displayed in synchronization with each other.

However, for displaying the moving images among the computers in synchronization with one another, the computers should be connected one another via fast communications lines.
Even though the fast connection is provided, unavoidable occurrence of a dropout, that is, momentary loss of the video signal, interferes the smooth display of the moving images. WO 99/46702 discloses an apparatus and collaborative video annotation utilising a single collaborative video annotation server.

It is desirable to provide a moving images synchronization system which makes computers smoothly display moving images in synchronisation with one another.

The invention is defined in the independent claims, to which reference should now be made. Advantageous sub-features are defined in the dependent claims.

With this configuration, after the moving images and web data including control code have been broadcasted to each client computer, the client computers display the moving images in synchronization with one another according to the control code. The moving images synchronization program may be utilized for multimedia education, or for guidance at a museum with which a guide guides visitors.

Preferred features of the present invention will now be described, purely by way of example, with reference to the accompanying drawings, in which:
FIG. 1 is a diagram showing a system architecture in one embodiment of the present invention;
FIG. 2 is a schematic diagram showing a user table;
FIG. 3 is a flowchart showing a log-in process;
FIG. 4 is a schematic diagram showing a moving images synchronization process;
FIG. 5 is an explanatory diagram showing an example of an original web data;
FIG. 6 is an explanatory diagram showing an example of a web data for synchronizing display;
FIG. 7 is a diagram showing an example of a screen displayed by a browser in a client machine;
FIG. 8 is a diagram showing an example of a screen displayed by a browser in a client machine;
FIG. 9 is a schematic diagram showing a process for manipulating moving images;
FIG. 10 is a schematic diagram showing a protocol prescribed for moving images manipulating information;
FIG. 11 is a schematic diagram showing a process for updating a layout; and
FIG. 12 is a schematic diagram showing a protocol prescribed for layout information.

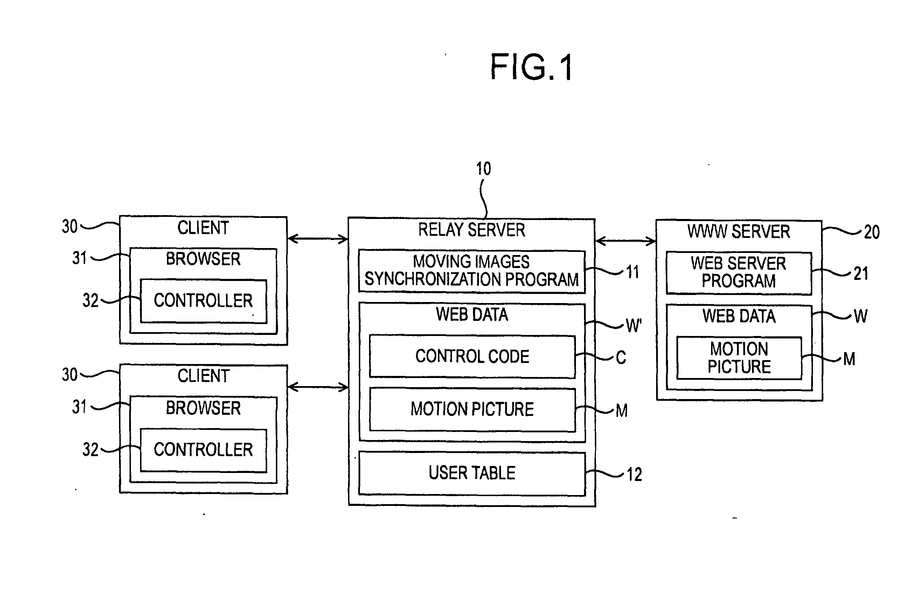

One embodiment of the present invention will hereinafter be described with reference to the accompanying drawings. FIG. 1 is a diagram showing a system architecture including a relay server machine 10 according to the embodiment. The relay server 10 is connected to a WWW server machine 20 via a network such as the Internet. Further, the relay server 10 is connectable to client machines 30 via the network.

The relay server 10, a server computer, has a storing device in which an operating system and a moving images synchronization program 11 are preinstalled. The moving images synchronization program 11 comprises a web server programmodule and a server-side program module.

The WWW server 20 has a storing device in which an operating system and a web server program are preinstalled. Further, with the storing device of the WWW server 20, web data W is stored. The web data W includes data written in HTML or XHTML, and a motion picture M (moving images) encoded according to MPEG, AVI, RealMedia, flash animation or other formats for encoding.

The client machine 30, a client computer, is composed of a computer such as a personal computer. The client 30 has a storing device in which an operating system and a web browser program 31 are preinstalled. The user of the client 30, as described later, logs in to the relay server 10 from the client 30. After the log-in, the browser 31 in the client 30 receives control code composed of a script or bytecode from the relay server 10, and the control code becomes a controller 32 which controls the processes in the browser 31.

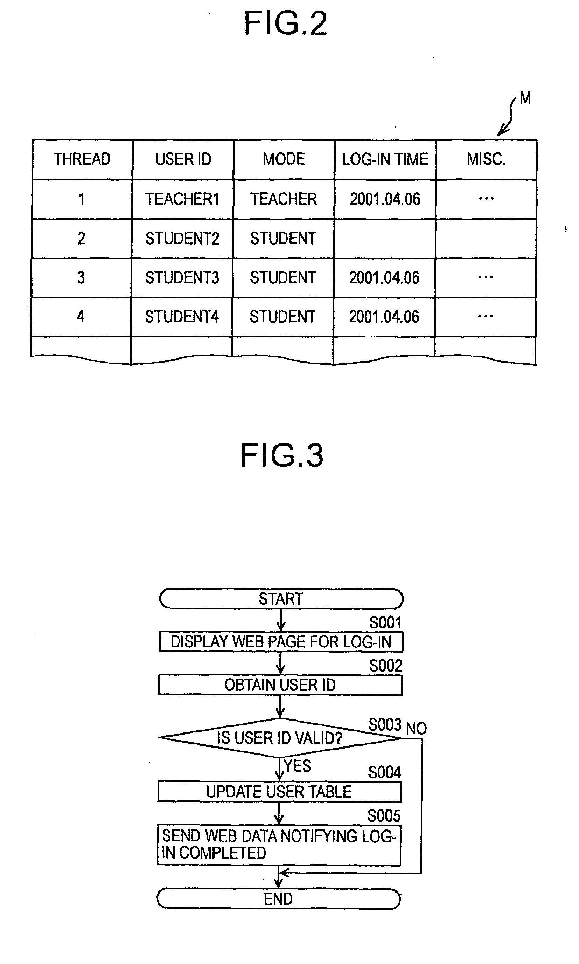

With the storing device of the relay server 10, a user table 12 is stored. FIG. 2 is a schematic diagram showing the user table 12, which has records corresponding to respective users registered previously. In the user table 12, each record has "USER ID," "MODE," "LOG-IN TIME," and "MISC." fields.

The "USER ID" field is stored with a user ID uniquely corresponding to one of users. As the user ID, the log-in name, the host name of the client 30, or the nickname of the user, can be used.

The "MODE" field is stored with information representing the authorization level assigned to the corresponding user. According to the example shown in FIG. 2, "TEACHER," or "STUDENT" mode is assigned. The "MISC." field is stored with the user's real name, an ID number, etc.

When one of the users logs in to the relay server 10 from the client 30, the log-in time is stored in the "LOG-IN TIME" field of the record in the user table 12 corresponding to the same user. Note that when the user logs in, the moving images synchronization program 11 assigns a thread corresponding to the same user.

The log-in process will be described below. FIG. 3 is a flowchart showing the log-in process in the relay server 10. After a user launches the browser 31 by operating the client 30, the browser 31 requests web data for log-in from the moving images synchronization program 11 in the relay server 10 to start the process as shown in FIG. 3.

At S001, the relay server 10 makes the client 30 display the web data for log-in as a web page. Then, the user enters the user ID into the displayed web page.

At the next step S002, the relay server 10 obtains the user ID entered by the user.

At the next step S003, the relay server 10 judges whether the entered user ID is valid or not. More specifically, the relay server 10 refers to the user table 12 to find the record whose "USER ID" field contains the user ID identical to that entered at S002. The relay server 10, if the record is found, advances the processing to S004. Whereas if not found, the relay server 10 terminates the processing.

At S004, the relay server 10 updates the user table 12. More specifically, the relay server 10 stores the present time in the "LOG-IN" field of the record whose user ID is identical to that obtained at S002, and assigns a thread corresponding to the user.

At S005, the relay server 10 sends the client 30 web data for notifying the fact that the log-in has successfully been completed. The sent web data contains control code for the initial processing which is composed of a script or an applet. In the control code, a parameter is set which represents the entity of the "MODE" field of the record in the user table 12 corresponding to the user. The client 30, when receives the web data for notifying, executes the control code. Note that the control code becomes the controller 32 to control the browser 31 by being executed on the same browser 31.

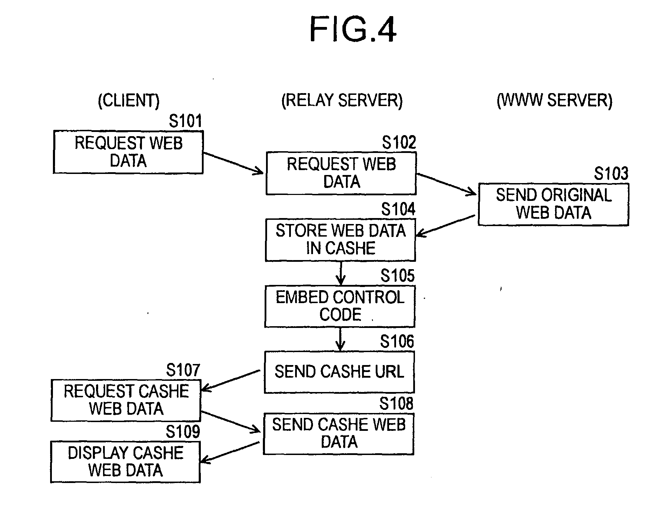

After the processing shown in FIG. 3, the client 30 of the user, who has logged in, requests the web data W containing the motion picture M from the relay server 10. Then, the relay server 10 starts the moving images synchronization process, which will hereinafter be described with reference to FIG. 4.

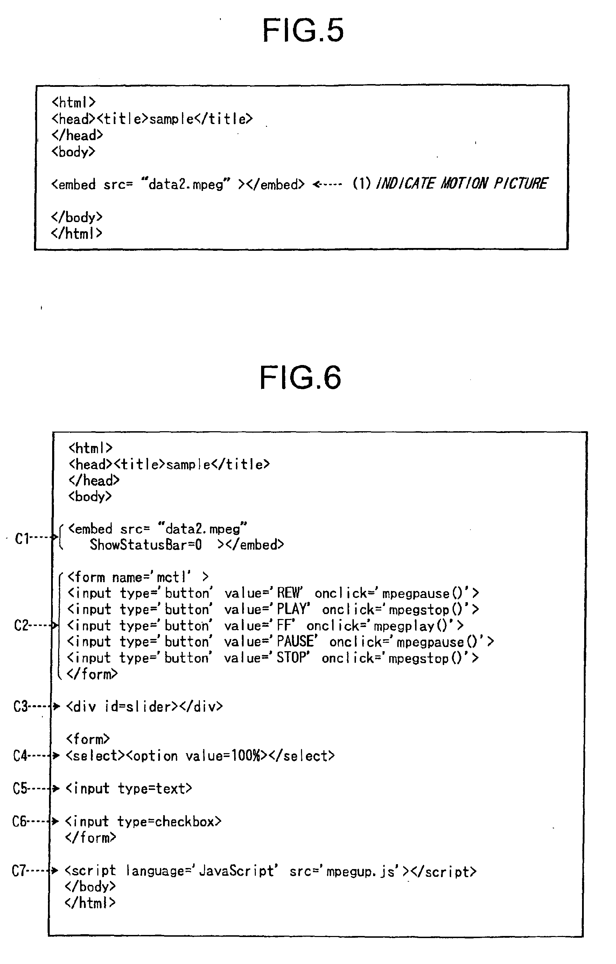

The client 30 requests the web data W containing the motion picture M from the relay server 10 (S101). Then, the relay server 10 requests the same web data W from the WWW server 20 (S102). In reply to the request, the WWW server 20 sends the web data W to the relay server 10 (S103). FIG. 5 is an explanatory diagram showing an example of the original web data W. Then, the relay server 10 receives the web data W to store it in cashe, a certain area reserved in the storing device (S104).

Further, the relay server 10 embeds the control code C for synchronization of motion pictures in the stored web data W to make web data W' for synchronizing display (S105). FIG. 6 is an explanatory diagram showing an example of the web data W' for synchronizing display. In FIG. 6, segments C1-C7 corresponds to the control code C. The control code C, for instance, comprises code written in HTML or XHTML, a script written in JavaScript, or bitecode of Java Applet.

Then, the relay server 10 sends a cashe URL, a URL indicating the web data W', to the client 30 (S106). The client 30 receives the cashe URL, and requires the web data W' by indicating the received cashe URL under control of the controller 32 (S107). In reply to the request, the relay server 10 sends the web data W' to the client 30 (S108).

The client 30 receives the web data W', and displays a web page generated based on the same web data W' (S109). As described above, the web data W' not only includes the motion picture M, but also the control code C embedded for moving images synchronization. Consequently, a function for moving images synchronization is added to the controller 32, by the control code C being executed in the browser 31 of the client 30.

As shown in FIG. 6, the web data W' for moving images synchronization comprises the original web data W shown in FIG. 5, and the control code C embedded in the original web data W. The control code C comprises code segments C1-C7.

The code segment C1 is composed of a statement generated by "ShowStatusBar = 0" being added to the portion (1) of the original web data W (FIG. 5) indicating the motion picture M. With the addition of "ShowStatusBar = 0," an operational component of a plug-in program which the designer of the original web data W designed for displaying the motion picture M, come to be hidden from view.

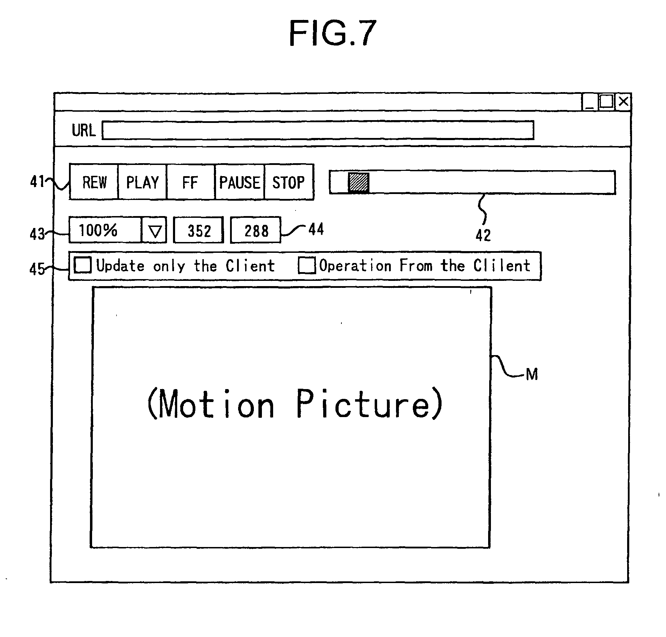

The code segment C2 relates to the processing for making the browser 31 display buttons indicating "REW"(rewind), "PLAY"(playback), "FF"(fast forward), "PAUSE," and "STOP" of the motion picture M. Note that the buttons correspond to the first type operational component for displaying moving images. FIG. 7 is a diagram showing an example of a screen displayed by the browser 31 in a client 30. In FIG. 7 is shown an operational component 41 including the buttons indicating "REW," "PLAY," "FF," "PAUSE," and "STOP" on the screen.

The code segment C3 relates to the processing for making the browser 31 display an indicator 42, an operational component indicating the position of the frame in the motion picture M. The indicator 42 corresponds to the second type operational component for displaying moving images. Note that the position of the frame represents the relative position of the present frame in the frames contained in the motion picture M in time sequence. The indicator 42 has a rectangular slider able to slide across in FIG. 7. When the frame on view is that displayed immediately after the start of a playback of the motion picture M, the slider is located at the left end in the moving range. On the other hand, when the frame on view is that displayed immediately before the end of a playback of the motion picture M, the slider is located at the right end in the moving range.

The code segment C4 relates to the processing for making the browser 31 display a select box 43, an operational component for designating the display size (%) of the motion picture M. The code segment C5 relates to the processing for making the browser 31 display a text box 44, an operational component for designating the display size (width, height) of the motion picture M by numeric values.

The code segment C6 relates to the processing for making the browser 31 display a check box 45. This check box 45 is used for setting whether changes of the display layout of the client 30 are reflected only in the same client 30 or in the other clients 30. If the "Update Only the Client" is checked, the changes of layout are reflected only in the client 30 where the changes originally occur. On the other hand, if the "Operation from the Client" is checked, the changes of layout are reflected not only in the client 30 where the changes originally occur, but also in the other client 30.

The code segment C7 relates to the processing for changing layouts. The code segment C7, according to the example shown in FIG. 6, is written in JavaScript. The entity indicated by the code segment C7 is a script whose file name is "mpegup.js" for executing processes of designating the default position of the motion picture M, designating the default size of the motion picture M, changing the locations of the motion picture M, displaying the operational components, and changing the web data W'.

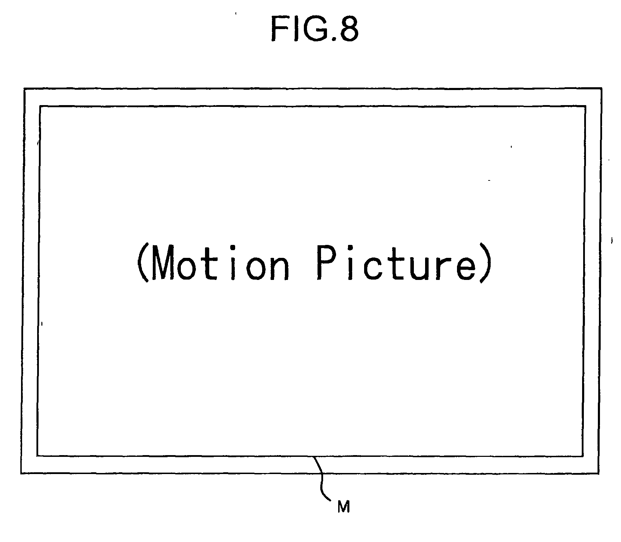

The controller 32 controls the browser 31 on the basis of the code segments C1-C7. Though the web data W' sent to clients 30 are identical, the default screens, default layouts, of the clients 30 are different one another. More specifically, after the log-in process according to FIG. 3, the controller 32 of the each client 30 holds the entity of the "MODE" field in the user table 12 (FIG. 2). That is, the controller 32 of the each client 30 recognizes the mode of the user operating the same client 30 is whether "TEACHER" or "STUDENT." As the processing for display at S109 in FIG. 4 is executed, the controller 32 makes browser 31 display the screen for a teacher shown in FIG. 7 if the mode is "TEACHER." On the other hand, the controller 32 makes browser 31 display the screen for a student shown in FIG. 8 if the mode is "STUDENT."

In the screen for a teacher (FIG. 7), are shown not only the motion picture M, but also the operational components41-45. On the other hand, in the screen for a student (FIG. 8), is only shown the motion picture M in a full-screen mode. Provided that clients 30 display the respective default screens according to the modes of the users, the user whose mode is a teacher can start the moving images synchronization process. More specifically, when the "PLAY" button of the operational component 41 displayed in the screen for the teacher (FIG. 7) is clicked by a pointing device such as a mouse, the synchronizing display of the motion picture M starts. That is, every client 30 starts a playback of the motion picture M simultaneously.

When the "REW," "PLAY," "FF," "PAUSE," or "STOP" button is pressed in the operational component 41, every client 30 executes rewind, playback, fast-forward, pause, or stop of the motion picture M. When the slider of the indicator 42 is dragged across in FIG. 7, every client 30 simultaneously restarts a playback at the frame corresponding to the position of the slider of the indicator 42.

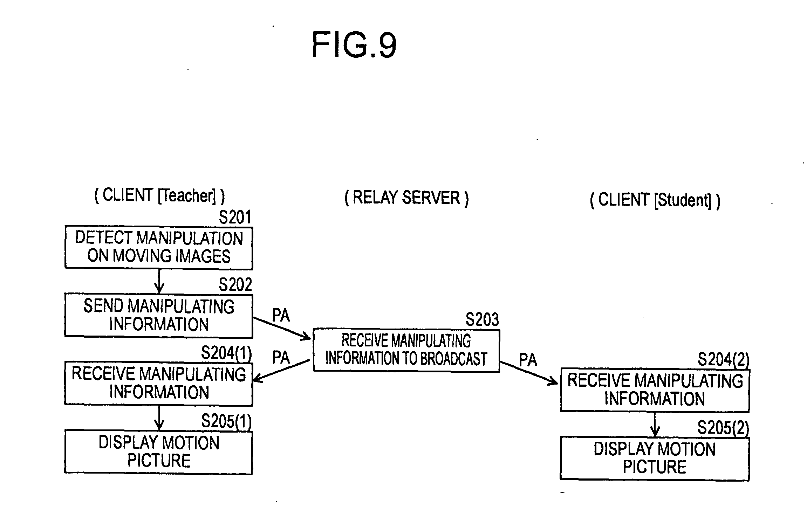

The processing when the operational component 41 or the indicator 42 is manipulated, will hereinafter be described with reference to FIG. 9. Note that the controller 32 of the teacher's client 30 continuously monitors generation of the events raised by the first type operation, a button of the operational component 41 being clicked, or the second type operation, the slider of the indicator 42 being dragged. When the controller 32 of the teacher's client 30 detects the event concerning manipulation of moving images (S201), generates manipulating information representing the detected event, and sends the manipulating information to the relay server 10 according to a protocol PA (S202).

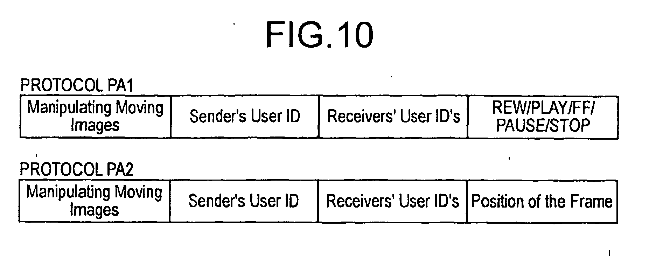

FIG. 10 is a schematic diagram showing the protocol PA prescribed for the manipulating information. The protocol PA is classified into a protocol PA1 corresponding to the first manipulating information, and a protocol PA2 corresponding to the second manipulating information. When a button in the operational component 41 is clicked, the manipulating information is sent according to the protocol PA1. When the slider of the indicator 42 is dragged, the manipulating information is sent according to the protocol PA2.

The protocol PA1 has the field indicating that the information to be sent is related to "Manipulating Moving Images," and also has "Sender's User ID" field, "Receivers' User ID's" field, and a field representing the generated event, one of REW/PLAY/FF/PAUSE/STOP. The "Sender's User ID" field is stored with the user ID of the user (teacher) whose client 30 detected the event. The "Receivers' User ID's" field is stored with all user ID's including the sender's.

The protocol PA2 has "Manipulating Moving Images," "Sender's User ID," and "Receivers' User ID'S" fields identical to the aforementioned protocol PA1. Further, the protocol PA2 has the "Position of the Frame" field indicating the position of the frame in the motion picture M. After manipulation of the indicator 42, the controller 32 of the teacher's client 30 detects the position of the frame in the motion picture M to set the value indicating the position of the frame in the "Position of the Frame" field.

When the manipulating information is sent according to the protocol PA, the relay server 10 receives the manipulating information to broadcast it to all the clients 30 according to the protocol PA (S203). Note that the manipulating information is also sent to the teacher's client 30 even though it is the sender of the same information.

The controller 32 of each client 30 receives the broadcasted manipulating information simultaneously (S204(1), S204(2)), and displays the motion picture M according to the received manipulating information (S205(1), S205(2)). For instance, with receiving the first manipulating information according to the protocol PAl, the controller 32 of the client 30 refers to the "REW/PLAY/FF/PAUSE/STOP" field of the manipulating information, and based on the field executes rewind, play, fast-forward, pause, or stop of the motion picture M. On the other hand, with receiving the second manipulating information according to the protocol PA2, the controller 32 of the client 30 refers to the "Position of the Frame" field of the manipulating information to specify the position of the frame, and starts a playback simultaneous with other clients 30 at the specified position of the frame.

As described above, all the clients 30 including the sender itself start manipulation of the motion pictures M simultaneously. The motion pictures M are, therefore, displayed in complete synchronization. That is, the relay server 10 makes every client 30 display smoothly desired motion picture contents provided by a WWW server 20 in real time and in synchronization. Note that the motion picture M is previously broadcasted to each client 30, then, displayed in synchronization. The display in synchronization is actualized by sending and receiving the manipulating information whose information content is far smaller than that of the motion picture M. Consequently, the display in synchronization is realized based on lines whose information-carrying capacity is relatively small, such as PHS (Personal Handy-Phone System) or ISDN (Integrated Services Digital Network).

In the aforementioned screen for a teacher shown in FIG. 7, is displayed the operational components concerning display layout, such as the select box 43, text box 44, and check box 45. The teacher operates these boxes 43-45 to change the layout of the motion picture M displayed by the client 30.

For example, with the selection of the relative value indicating the size of the view area of the motion picture M via select box 43, the size of the motion picture M in the client 30 is updated. With input of the width and height of the view area of the motion picture M via text box 44, the size of the motion picture M is updated. Note that if "Update Only the Client" of the check box 45 is checked, the update of the layout is reflected only in the client 30 to which manipulation is made. On the other hand, if "Operation from the Client" of the check box 45 is checked, the update of the layout is reflected in every client 30.

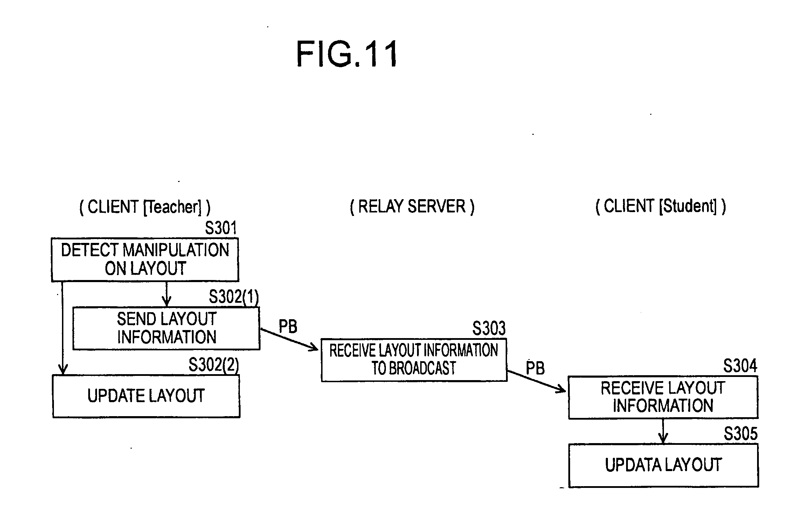

The processing will hereinafter be described when the manipulation on the layout is made and provided "Operation from the Client" of the check box 45 is checked, with reference to FIG. 11. Note that the controller 32 of the teacher's client 30 continuously monitors the generation of the event corresponding to the boxes 43-45. When the controller 32 of the teacher's client 30 detects the event indicating manipulation on layout via select box 43 or text box 44 (S301), generates layout information including the detected event to send it to the relay server 10 according to the protocol PB (S302(1)), and update coincidently the layout in the same client 30 itself (S302(2)).

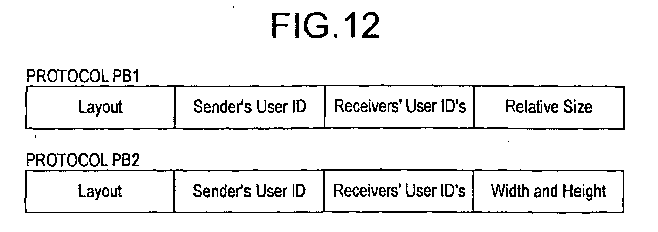

The layout information sent at S301(1) will further be described. FIG. 12 is a schematic diagram showing a protocol PB prescribed for the layout information. The protocol PB is classified into the protocol PB1 corresponding to designation of a relative size, and the protocol PB2 corresponding to designation of an absolute size. With designation of a relative size via select box 43, the layout information is sent according to the protocol PB1. With designation of a width and a height via text box 45, the layout information is sent according to the protocol PB2.

The protocol PB1 has the field indicating that the information to be sent is related to "Layout," and also has "Sender's User ID," "Receivers User ID's," and "Relative Size" fields. The "Sender's User ID" field is stored with the user ID of the user (teacher) whose client 30 detected the event. The "Receivers' User ID's" field is stored with all the other users' user ID's. The "Relative Size" field is stored with the relative size of the motion picture M detected via select box 43.

The protocol PB2 has "Layout," "Sender's User ID," and "Receivers' User ID's" fields identical to the aforementioned protocol PB1. Further, the protocol PB2 has "Width and Height" field, which is stored with the width and the height of the motion picture M detected via text box 44.

When the layout information is sent according to the protocol PB, the relay server 10 receives the layout information to broadcast it to all the clients 30 except the sender according to the protocol PB (S303). That is, the relay server 10 broadcasts the layout information to the clients 30 of the users whom "Receivers' User ID's" of the layout information indicates . Note that the layout information is not sent to the sender, the teacher's client 30.

The controller 32 of each student's client 30 receives the broadcasted layout information (S304), and updates the display layout of the motion picture M according to the received layout information (S305). For instance, with receiving the layout information according to the protocol PB1, the controller 32 of client 30 updates the view area of the motion picture M so as to coincide with the area indicated by "Relative Size" of the layout information. With receiving the layout information according to the protocol PB2, the controller 32 of client 30 updates the view area of the motion picture M so as to coincide with the area indicated by "Width and Height" of the layout information.

As described above, the layout of the students' clients 30 are updated based on the broadcasted layout information. Note that the layout of the teacher's client 30 has already updated based on the manipulation detected in the same client 30 (S302 (2)). Consequently, the update of the layout is reflected in every client 30. According to the above description, the "Receiver's User ID" field of the layout information is stored with all user ID's except the teacher as a sender. In contrast to that, if the "Receiver's user ID" is stored with only specified users' user ID's, the update of the layout is reflected only in the specified users' clients 30. Further, according to the above description, the update of the layout is concerned with a size. Without restriction to the example, the update of the layout may be concerned with a location, a form, and zoom in/out.

According to the moving images synchronization system of the present invention that have the architectures described above, on each client computer, moving images are smoothly displayed in real time and in synchronization with another.

While there has been described what are at present considered to be preferred embodiments of the present invention, it will be understood that various modifications may be made thereto, and it is intended that the appended claims cover all such modifications as fall within the true scope of the invention.

The present invention may be embodied in a computer program. The computer program may be stored on a computer-readable medium, or it could, for example, be embodied in a signal such as a downloadable data signal provided from an Internet web site. The appended computer program claims are to be interpreted as covering a computer program by itself, or as a record on a carrier, or as a signal, or in any other form.

## Claims

1. A program product comprising a moving images synchronization program, said moving images synchronization program controlling a relay server computer (10), connectable to client computers each executing a web browser and to a contents server computer (20) holding web data including moving images, the relay server computer holding a user table (12) storing a user ID having one of a teacher mode and a student mode for each client computer; the moving images synchronization program controlling the relay server computer to execute:
a step of obtaining the web data from the contents server computer (20);
a step of embedding a first control code (C) making the client computers (30) display the moving images reflecting manipulation of the same moving images, and a second control code (C) making the client computers (30) transmit manipulation of the moving images to said relay server computer in the obtained web data;
a step of sending the web data to each of said client computers (30); and
a step of broadcasting, when the manipulation of the moving images is received from one of said client computers (30) with a user ID having a teacher mode, the same manipulation to all of said client computers.

2. The program product according to claim 1, said second control code (C) included in said web data making said teacher-mode client computer (30) generate, when a first manipulation selected from a group of playback, stop, pause, fast-forward, and rewind of the moving images is made at the same client computer, a first manipulating information indicating the first manipulation, and send it to said relay server computer (10) to make the same relay server computer (10) broadcast the first manipulating information to all of said client computers to make each of said client computers (30) display the moving images reflecting the first manipulation indicated by the first manipulating information in synchronization with those of the sending client computer.

3. The program product according to claim 1, said second control code (C) included in said web data making said teacher-mode client computer (30) generate, when a second manipulation designating a start position of a frame to be played back is made at the same client computer, a second manipulating information indicating the second manipulation, and send it to said relay server computer (10) to make the same relay server computer (10) broadcast the second manipulating information to all of said client computers to make each of said client computers (30) display the moving images reflecting the second manipulation indicated by the second manipulating information in synchronization with those of the sending client computer.

4. The program product according to claim 1, said second control code included in said web data making said teacher-mode client computer (30) generate, when a third manipulation designating the moving images' layout is made at the same client computer, a third manipulating information indicating the third manipulation, and send it to said relay server computer (10) to make the same relay server computer transmit the thirdmanipulating information to those selected from said client computers to make each of the selected client computers display the moving images with the third manipulation indicated by the third manipulating information.

5. The program product according to claim 1, said first control code included in said web data making said teacher-mode client computer (30) display the moving images with a default layout prescribed with respect to a user of the same client computer.

6. A moving images synchronization method executed by a relay server computer (10) connectable to client computers (30) each executing a web browser and to a contents server computer (20) holding web data including moving images, the relay server computer holding a user table (12) storing a user ID having one of a teacher mode and a student mode for each client computer; the moving images synchronization program controlling the relay server computer comprising :
a step of obtaining the web data from the contents server computer (20);
a step of embedding a first control code (C) making the client computers (30) display the moving images reflecting manipulation of the same moving images, and a second control code making the client computers (30) transmit manipulation of the moving images to said relay server computer in the obtained web data;
a step of sending the web data to each of said client computers (30); and
a step of broadcasting, when the manipulation of the moving images is received from one of said client computers with a user ID having a teacher mode, the same manipulation to all of said client computers.

7. The method according to claim 6, said second control code included in said web data making said teacher-mode client computer (30) generate, when a first manipulation selected from a group of playback, stop, pause, fast-forward, and rewind of the moving images is made at the same client computer (30), a first manipulating information indicating the first manipulation, and send it to said relay server computer (10) to make the same relay server computer broadcast the first manipulating information to all of said client computers to make each of said client computers display the moving images reflecting the first manipulation indicated by the first manipulating information in synchronization with those of the sending client computer.

8. The method according to claim 6, said second control code (C) included in said web data making said teacher-mode client computer (30) generate, when a second manipulation designating a start position of a frame to be played back is made at the same client computer, a second manipulating information indicating the second manipulation, and send it to said relay server computer (10) to make the same relay server computer broadcast the second manipulating information to all of said client computers (30) to make each of said client computers display the moving images reflecting the second manipulation indicated by the second manipulating information in synchronization with those on the sending client computer.

9. The method according to claim 6, said second control code (C) included in said web data making said teacher-mode client computer (30) generate, when a third manipulation designating the moving images' layout is made at the same client computer, a third manipulating information indicating the third manipulation, and send it to said relay server computer (10) to make the same relay server computer transmit the thirdmanipulating information to those selected from said client computers to make each of the selected client computers display the moving images with the third manipulation indicated by the third manipulating information.

10. The method according to claim 6, said first control code (C) included in said web data making said teacher-mode client computer (30) display the moving images with a default layout prescribed with respect to a user of the same client computer.

11. A moving images synchronization system, comprising:
a relay server computer (10) connectable to client computers each executing a web browser and to a contents server computer (20) holding web data including moving images, the relay server computer holding a user table (12) storing a user ID having one of a teacher mode and a student mode for each client computer; the moving images synchronization program controlling the relay server computer; and
a moving images synchronization program stored on a storing device, said moving images synchronization program controlling said relay server computer to execute:
a step of obtaining the web data from the contents server computer (20);
a step of embedding a first control code (C) making the client computers (30) display the moving images reflecting manipulation of the same moving images, and a second control code (C) making the client computers transmit manipulation of the moving images to said relay server computer in the obtained web data;
a step of sending the web data to each of said client computers (30); and
a step of broadcasting, when the manipulation of the moving images is received from one of said client computers with a user ID having a teacher mode, the same manipulation to all of said client computers.

12. The system according to claim 11, said second control code (C) included in said web data making said teacher-mode client computer (30) generate, when a first manipulation selected from a group of playback, stop, pause, fast-forward, and rewind of the moving images is made at the same client computer, a first manipulating information indicating the first manipulation, and send it to said relay server computer (10) to make the same relay server computer broadcast the first manipulating information to all of said client computers (30) to make each of said client computers display the moving images reflecting the first manipulation indicted by the first manipulating information in synchronization with those of the sending client computer.

13. The system according to claim 11, said second control code (C) included in said web data making said teacher-mode client computer generate, when a second manipulation designating a position of a start frame to be played back is made at the same client computer (30), a second manipulating information indicating the second manipulation, and send it to said relay server computer (10) to make the same relay server computer broadcast the second manipulating information to all of said client computers to make each of said client computers display the moving images reflecting the second manipulation indicated by the second manipulating information in synchronization with those of the sending client computer.

14. The system according to claim 11, said second control code (C) included in said web data making said teacher-mode client computer (30) generate, when a third manipulation designating the moving images' layout is made at the same client computer, a third manipulating information indicating the third manipulation, and send it to said relay server computer (10) to make the same relay server computer transmit the third manipulating information to those selected from said client computers to make each of the selected client computers (30) display the moving images with the third manipulation indicated by the third manipulating information.

15. The system according to claim 11, said first control code (C) included in said web data making said teacher-mode client computer (30) display the moving images with a default layout prescribed with respect to a user of the same client computer.

## Patentansprüche

1. Programmprodukt mit einem Synchronisationsprogramm für Bewegtbilder, wobei das Synchronisationsprogramm für Bewegtbilder einen Relais-Servercomputer (10) steuert, der verbindbar ist mit Clientcomputern, die jeweils einen Web-Browser ausführen, und mit einem Inhalts-Servercomputer (20), der Web-Daten hält, die Bewegtbilder enthalten, welcher Relais-Servercomputer eine Nutzertabelle (12) hält, die einen Nutzer-ID, der entweder einen Lehrermodus oder einen Schülermodus hat, für jeden Clientcomputer speichert; welches Synchronisationsprogramm für Bewegtbilder den Relais-Servercomputer steuert, um auszuführen:
einen Schritt zum Erhalten der Web-Daten von dem Inhalts-Servercomputer (20);
einen Schritt zum Einbetten eines ersten Steuercodes (C), der bewirkt, dass die Clientcomputer (30) die Bewegtbilder anzeigen, die eine Manipulation derselben Bewegtbilder widerspiegeln, und eines zweiten Steuercodes (C), der bewirkt, dass die Clientcomputer (30) die Manipulation der Bewegtbilder zu dem Relais-Servercomputer übertragen, in den erhaltenen Web-Daten;
einen Schritt zum Senden der Web-Daten an jeden der Clientcomputer (30); und
einen Schritt zum Rundsenden, wenn die Manipulation der Bewegtbilder von einem der Clientcomputer (30) empfangen wird, der einen Nutzer-ID mit einem Lehrermodus hat, derselben Manipulation an all die genannten Clientcomputer.

2. Programmprodukt nach Anspruch 1, wobei der zweite Steuercode (C), der in den Web-Uaten enthalten ist, bewirkt, dass der Clientcomputer (30) mit dem Lehrermodus dann, wenn eine erste Manipulation, die ausgewählt wird aus einer Gruppe bestehend aus Wiedergabe, Stopp, Pause, Schnellvorlauf und Zurückspulen der Bewegtbilder, an demselben Clientcomputer vorgenommen wird, erste Manipulationsinformationen erzeugt, die die erste Manipulation angeben, und sie an den Relais-Servercomputer (10) sendet, damit derselbe Relais-Servercomputer (10) die ersten Manipulationsinformationen als Rundsendung an all die genannten Clientcomputer schickt, so dass jeder der Clientcomputer (30) die Bewegtbilder, die die erste Manipulation widerspiegeln, die durch die ersten Manipulationsinformationen angegeben wird, synchron mit jenen des sendenden Clientcomputers anzeigt.

3. Programmprodukt nach Anspruch 1, wobei der zweite Steuercode (C), der in den Web-Daten enthalten ist, bewirkt, dass der Clientcomputer (30) mit dem Lehrermodus dann, wenn eine zweite Manipulation, die eine Startposition eines wiederzugebenden Rahmens bezeichnet, an demselben Clientcomputer vorgenommen wird, zweite Manipulationsinformationen erzeugt, die die zweite Manipulation angeben, und sie an den Relais-Servercomputer (10) sendet, damit derselbe Relais-Servercomputer (10) die zweiten Manipulationsinformationen als Rundsendung an all die genannten Clientcomputer schickt, so dass jeder der Clientcomputer (30) die Bewegtbilder, die die zweite Manipulation widerspiegeln, die durch die zweiten Manipulationsinformationen angegeben wird, synchron mit jenen des sendenden Clientcomputers anzeigt.

4. Programmprodukt nach Anspruch 1, wobei der zweite Steuercode, der in den Web-Daten enthalten ist, bewirkt, dass der Clientcomputer (30) mit dem Lehrermodus dann, wenn eine dritte Manipulation, die das Layout der Bewegtbilder bezeichnet, an demselben Clientcomputer vorgenommen wird, dritte Manipulationsinformationen erzeugt, die die dritte Manipulation angeben, und sie an den Relais-Servercomputer (10) sendet, damit derselbe Relais-Servercomputer die dritten Manipulationsinformationen zu ausgewählten von den Clientcomputern überträgt, so dass jeder der ausgewählten Clientcomputer die Bewegtbilder mit der dritten Manipulation anzeigte die durch die dritten Manipulationsinformationen angegeben wird.

5. Programmprodukt nach Anspruch 1, wobei der erste Steuercode, der in den Web-Daten enthalten ist, bewirkt, dass der Clientcomputer (30) mit dem Lehrermodus die Bewegtbilder mit einem SLandard-Layout anzeigt, das hinsichtlich eines Nutzers desselben Clientcomputers vorgeschrieben ist.

6. Synchronisationsverfahren für Bewegtbilder, das durch einen Relais-Servercomputer (10) ausgeführt wird, der verbindbar ist mit Clientcomputern (30), die jeweils einen Web-Browser ausführen, und mit einem Inhalts-Servercomputer (20), der Web-Daten hält, die Bewegtbilder enthalten, welcher Relais-Servercomputer eine Nutzertabelle (12) hält, die einen Nutzer-ID, der entweder einen Lehrermodus oder einen Schülermodus hat, für jeden Clientcomputer speichert; welches Synchronisationsverfahren für Bewegtbilder den Relais-Servercomputer steuert und umfasst:
einen Schritt zum Erhalten der Web-Daten von dem Inhalts-Servercomputer (20);
einen Schritt zum Einbetten eines ersten Steuercodes (C), der bewirkt, dass die Clientcomputer (30) die Bewegtbilder anzeigen, die eine Manipulation derselben Bewegtbilder widerspiegeln, und eines zweiten Steuercodes, der bewirkt, dass die Clientcomputer (30) die Manipulation der Bewegtbilder zu dem Relais-Servercomputer übertragen, in den erhaltenen Web-Daten;
einen Schritt zum Senden der Web-Daten an jeden der Clientcomputer (30); und
einen SchritL zum Rundsenden, wenn die Manipulation der Bewegtbilder von einem der Clientcomputer (30) empfangen wird, der einen Nutzer-ID mit einem Lehrermodus hat, derselben Manipulation an all die genannten Clientcomputer.

7. Verfahren nach Anspruch 6, wobei der zweite Steuercode, der in den Web-Daten enthalten ist, bewirkt, dass der Clientcomputer (30) mit dem Lehrermodus dann, wenn eine erste Manipulation, die ausgewählt wird aus einer Gruppe bestehend aus Wiedergabe, Stopp, Pause, Schnellvorlauf und Zurückspulen der Bewegtbilder, an demselben Clientcomputer (30) vorgenommen wird, erste Manipulationsinformationen erzeugt, die die erste Manipulation angeben, und sie an den Relais-Servercomputer (10) sendet, damit derselbe Relais-Servercomputer die ersten Manipulationsinformationen als Rundsendung an all die genannten Clientcomputer schickt, so dass jeder der Clientcomputer die Bewegtbilder, die die erste Manipulation widerspiegeln, die durch die ersten Manipulationsinformationen angegeben wird, synchron mit jenen des sendenden Clientcomputers anzeigt.

8. Verfahren nach Anspruch 6, wobei der zweite Steuercode (C), der in den Web-Daten enthalten ist, bewirkt, dass der Clientcomputer (30) mit dem Lehrermodus dann, wenn eine zweite Manipulation, die eine Startposition eines wiederzugebenden Rahmens bezeichnet, an demselben Clientcomputer vorgenommen wird, zweite Manipulationsinformationen erzeugt, die die zweite Manipulation angeben, und sie an den Relais-Servercomputer (10) sendet, damit derselbe Relais-Servercomputer die zweiten Manipulationsinformationen als Rundsendung an all die genannten Clientcomputer (30) schickt, so dass jeder der Clicntcomputer die Bewegtbilder, die die zweite Manipulation widerspiegeln, die durch die zweiten Manipulationsinformationen angegeben wird, synchron mit jenen des sendenden Clientcomputers anzeigt.

9. Verfahren nach Anspruch 6, wobei der zweite Steuercode (C), der in den Web-Daten enthalten ist, bewirkt, dass der Clientcomputer (30) mit dem Lehrermodus dann, wenn eine dritte Manipulation, die das Layout der Bewegtbilder bezeichnet, an demselben Clientcomputer vorgenommen wird, dritte Manipulationsinformationen erzeugt, die die dritte Manipulation angeben, und sie an den Relais-Servercomputor (10) sendet, damit derselbe Relais-Servercomputer die dritten Manipulationsinformationen zu ausgewählten von den Clientcomputern überträgt, so dass jeder der ausgewählten Clientcomputer die Bewegtbilder mit der dritten Manipulation anzeigt, die durch die dritten Manipulationsinformationen angegeben wird.

10. Verfahren nach Anspruch 6, wobei der erste Steuercode (C), der in den web-Daten enthalten ist, bewirkt, dass der Clientcomputer (30) mit dem Lehrcrmodus die Bewegtbilder mit einem Standard-Layout anzeigt, das hinsichtlich eines Nutzers desselben Clientcomputers vorgeschrieben ist.

11. Synchronisationssystem für Bewegtbilder mit:
einem Relais-Servercomputer (10), der verbindbar ist mit Clientcomputern, die jeweils einen Web-Browscr ausführen, und mit einem Inhalts-Servercomputer (20), der Web-Daten hält, die Bewegtbilder enthalten, welcher Relais-Servcrcomputer eine Nutzertabelle (12) hält, die einen Nutzer-ID, der entweder einen Lehrermodus oder einen Schülermodus hat, für jeden Clientcomputer speichert; welches Synchronisationssystem für Bewegtbilder den Relais-Servercomputer steuert; und
einem Synchronisationsprogramm für Bewegtbilder, das auf einer Speicheranordnung gespeichert ist, welches Synchronisationsprogramm für Bewegtbilder den Relais-Servercomputer steuert, um auszuführen:
einen Schritt zum Erhalten der Web-Daten von dem Inhalts-Servercomputer (20);
einen Schritt zum Einbetten eines ersten Steuercodes (C), der bewirkt, dass die Clientcomputer (30) die Bewegtbilder anzeigen, die eine Manipulation derselben Bewegtbilder widerspiegeln, und eines zweiten Steuercodes (C), der bewirkt, dass die Clientcomputer die Manipulation der Bewegtbilder zu dem Relais-Servercomputer übertragen, in den erhaltenen Web-Daten;
einen Schritt zum Senden der Web-Daten an jeden der Clientcomputer (30); und
einen Schritt zum Rundsenden, wenn die Manipulation der Bewegtbilder von einem der Clientcomputer empfangen wird, der einen Nutzer-ID mit einem Lehrermodus hat, derselben Manipulation an all die genannten Clientcomputer.

12. System nach Anspruch 11, wobei der zweite Steuercode (C), der in den Web-Daten enthalten ist, bewirkt, dass der Clientcomputer (30) mit dem Lehrermodus dann, wenn eine erste Manipulation, die ausgewählt wird aus einer Gruppe bestehend aus Wiedergabe, Stopp, Pause, Schnellvorlauf und Zurückspulen der Bewegtbilder, an demselben Clientcomputer vorgenommen wird, erste Manipulationsinformationen erzeugt, die die erste Manipulation angeben, und sie an den Relais-Servercomputer (10) sendet, damit derselbe Relais-Servercomputer die ersten Manipulationsinformationen als Rundsendung an all die genannten Clientcomputer (30) schickt, so dass jeder der Clientcomputer die Bewegtbilder, die die erste Manipulation widerspiegeln, die durch die ersten Manipulationsinformationen angegeben wird, synchron mit jenen des sendenden Clientcomputers anzeigt.

13. System nach Anspruch 11, wobei der zweite Steuercode (C), der in den Web-Daten enthalten ist, bewirkt, dass der Clientcomputer mit dem Lehrermodus dann, wenn eine zweite Manipulation, die eine Position eines wiederzugebenden Startrahmens bezeichnet, an demselben Clientcomputer (30) vorgenommen wird, zweite Manipulationsinformationen erzeugt, die die zweite Manipulation angeben, und sie an den Relais-Servercomputer (10) sendet, damit derselbe Relais-Servercomputer die zweiten Manipulationsinformationen als Rundsendung an all die genannten Clientcomputer schickt, so dass jeder der Clientcomputer die Bewegtbilder, die die zweite Manipulation widerspiegeln, die durch die zweiten Manipulationsinformationen angegeben wird, synchron mit jenen des sendenden Clientcomputers anzeigt.

14. System nach Anspruch 11, wobei der zweite Steuercode (C), der in den Web-Daten enthalten ist, bewirkt, dass der Clicntcomputer (30) mit dem Lehrermodus dann, wenn eine dritte Manipulation, die das Layout der Bewcgtbilder bezeichnet, an demselben Clientcomputer vorgenommen wird, dritte Manipulationsinformationen erzeugt, die die dritte Manipulation angeben, und sie an den Relais-Servercomputer (10) sendet, damit derselbe Relais-Servercomputer die dritten Manipulationsinformationen zu ausgewählten von den Clientcomputern überträgt, so dass jeder der ausgewählten Clientcomputer (30) die Bewegtbilder mit der dritten Manipulation anzeigt, die durch die dritten Manipulationsinformationen angegeben wird.

15. System nach Anspruch 11, wobei der erste Steuercode (C), der in den Web-Daten enthalten ist, bewirkt, dass der Clientcomputer (30) mit dem Lehrermodus die Bewegtbilder mit einem Standard-Layout anzeigt, das hinsichtlich eines Nutzers desselben Clientcomputers vorgeschrieben ist.

## Revendications

1. Produit de programme comprenant un programme de synchronisation d'images mobiles, ledit programme de synchronisation d'images mobiles commandant un ordinateur serveur de relais (10), qui peut être connecté à des ordinateurs de client dont chacun exécute un navigateur web et à un ordinateur serveur de contenu (20) contenant des données web incluant des images mobiles, l'ordinateur serveur de relais contenant une table d'utilisateurs (12) qui stocke une ID d'utilisateur présentant soit un mode enseignant, soit un mode étudiant pour chaque ordinateur de client ; le programme de synchronisation d'images mobiles commandant l'ordinateur serveur de relais pour exécuter :
une étape d'obtention des données web à partir de l'ordinateur serveur de contenu (20) ;
une étape de noyage d'un premier code de commande (C) ayant pour effet que les ordinateurs de client (30) affichent les images mobiles en reflétant la manipulation des mêmes images mobiles et un second code de commande (C) ayant pour effet que les ordinateurs de client (30) transmettent une manipulation des images mobiles audit ordinateur serveur de relais dans les données web obtenues ;
une étape d'envoi des données web sur chacun desdits ordinateurs de client (30) ; et
une étape de diffusion, lorsque la manipulation des images mobiles est reçue depuis l'un desdits ordinateurs de client (30) avec une ID d'utilisateur qui présente un mode enseignant, de la même manipulation sur tous lesdits ordinateurs de client.

2. Produit de programme selon la revendication 1, ledit second code de commande (C) qui est inclus dans lesdites données web ayant pour effet que ledit ordinateur de client de mode enseignant (30) génère, lorsqu'une première manipulation sélectionnée à partir d'un groupe constitué par une relecture, un arrêt, une pause, une avance rapide et un rebobinage des images mobiles est réalisée au niveau du même ordinateur de client, une première information de manipulation indiquant la première manipulation et envoie celle-ci sur ledit ordinateur serveur de relais (10) afin de faire en sorte que le même ordinateur serveur de relais (10) diffuse la première information de manipulation sur tous lesdits ordinateurs de client afin de faire en sorte que chacun desdits ordinateurs de client (30) affiche les images mobiles reflétant la première manipulation indiquée par la première information de manipulation en synchronisation avec celles de l'ordinateur de client d'envoi.

3. Produit de programme selon la revendication 1, ledit second code de commande (C) qui est inclus dans lesdites données web ayant pour effet que ledit ordinateur de client de mode enseignant (30) génère, lorsqu'une seconde manipulation désignant une position de début d'une image destinée à être relue est réalisée au niveau du même ordinateur de client, une seconde information de manipulation indiquant la seconde manipulation et l'envoie sur ledit ordinateur serveur de relais (10) afin de faire en sorte que le même ordinateur serveur de relais (10) diffuse la seconde information de manipulation sur tous lesdits ordinateurs de client afin de faire en sorte que chacun desdits ordinateurs de client (30) affiche les images mobiles reflétant la seconde manipulation indiquée par la seconde information de manipulation en synchronisation avec celles de l'ordinateur de client d'envoi.

4. Produit de programme selon la revendication 1, ledit second code de commande qui est inclus dans lesdites données web ayant pour effet que ledit ordinateur de client de mode enseignant (30) génère, lorsqu'une troisième manipulation désignant l'implantation des images mobiles est réalisée au niveau du même ordinateur de client, une troisième information de manipulation indiquant la troisième manipulation et l'envoie sur ledit ordinateur serveur de relais (10) pour faire en sorte que le même ordinateur serveur de relais transmette la troisième information de manipulation sur ceux sélectionnés parmi lesdits ordinateurs de client afin de faire en sorte que chacun des ordinateurs de client sélectionnés affiche les images mobiles avec la troisième manipulation indiquée par la troisième information de manipulation.

5. Produit de programme selon la revendication 1, ledit premier code de commande qui est inclus dans lesdites données web ayant pour effet que ledit ordinateur de client de mode enseignant (30) affiche les images mobiles avec une implantation par défaut qui est prescrite en relation avec un utilisateur du même ordinateur de client.

6. Procédé de synchronisation d'images mobiles exécuté par un ordinateur serveur de relais (10) qui peut être connecté à des ordinateurs de client (30) dont chacun exécute un navigateur web et à un ordinateur serveur de contenu (20) qui contient des données web incluant des images mobiles, l'ordinateur serveur de relais contenant une table d'utilisateurs (12) qui stocke une ID d'utilisateur présentant soit un mode enseignant, soit un mode étudiant pour chaque ordinateur de client ; le programme de synchronisation d'images mobiles commandant l'ordinateur serveur de relais comprenant :
une étape d'obtention des données web à partir de l'ordinateur serveur de contenu (20) ;
une étape de noyage d'un premier code de commande (C) qui a pour effet que les ordinateurs de client (30) affichent les images mobiles en reflétant une manipulation des mêmes images mobiles et d'un second code de commande ayant pour effet que les ordinateurs de client (30) transmettent une manipulation des images mobiles audit ordinateur serveur de relais dans les données web obtenues ;
une étape d'envoi des données web sur chacun desdits ordinateurs de client (30) ; et
une étape de diffusion, lorsque la manipulation des images mobiles est reçue depuis l'un desdits ordinateurs de client avec une ID d'utilisateur présentant un mode enseignant, de la même manipulation sur tous lesdits ordinateurs de client.

7. Procédé selon la revendication 6, ledit second code de commande qui est inclus dans lesdites données web ayant pour effet que ledit ordinateur de client de mode enseignant (30) génère, lorsqu'une première manipulation choisie parmi un groupe constitué par une relecture, un arrêt, une pause, une avance rapide et un rebobinage des images mobiles est réalisée au niveau du même ordinateur de client (30), une première information de manipulation indiquant la première manipulation et l'envoie sur ledit ordinateur serveur de relais (10) afin de faire en sorte que le même ordinateur serveur de relais diffuse la première information de manipulation sur tous lesdits ordinateurs de client afin de faire en sorte que chacun desdits ordinateurs de client affiche les images mobiles reflétant la première manipulation indiquée par la première information de manipulation en synchronisation avec celles de l'ordinateur de client d'envoi.

8. Procédé selon la revendication 6, ledit second code de commande (C) qui est inclus dans lesdites données web ayant pour effet que ledit ordinateur de client de mode enseignant (30) génère, lorsqu'une seconde manipulation désignant une position de début d'une image à relire est réalisée au niveau du même ordinateur de client, une seconde information de manipulation indiquant la seconde manipulation et l'envoie sur ledit ordinateur serveur de relais (10) afin de faire en sorte que le même ordinateur serveur de relais diffuse la seconde information de manipulation sur tous lesdits ordinateurs de client (30) afin de faire en sorte que chacun desdits ordinateurs de client affiche les images mobiles en reflétant la seconde manipulation qui est indiquée par la seconde information de manipulation en synchronisation avec celles sur l'ordinateur de client d'envoi.

9. Procédé selon la revendication 6, ledit second code de commande (C) qui est inclus dans lesdites données web ayant pour effet que ledit ordinateur de client de mode enseignant (30) génère, lorsqu'une troisième manipulation désignant l'implantation des images mobiles est réalisée au niveau du même ordinateur de client, une, troisième information de manipulation indiquant la troisième manipulation et l'envoie sur ledit ordinateur serveur de relais (10) afin de faire en sorte que le même ordinateur serveur de relais transmette la troisième information de manipulation à ceux sélectionnés parmi lesdits ordinateurs de client afin de faire en sorte que chacun desdits ordinateurs de client sélectionnés affiche les images mobiles avec la troisième manipulation qui est indiquée par la troisième information de manipulation.

10. Procédé selon la revendication 6, ledit premier code de commande (C) qui est inclus dans lesdites données web ayant pour effet que ledit ordinateur de client de mode enseignant (30) affiche les images mobiles selon une implantation par défaut prescrite en relation avec un utilisateur du même ordinateur de client.

11. Système de synchronisation d'images mobiles, comprenant :
un ordinateur serveur de relais (10) qui peut être connecté à des ordinateurs de client dont chacun exécute un navigateur web et à un ordinateur serveur de contenu (20) contenant des données web incluant des images mobiles, l'ordinateur serveur de relais contenant une table d'utilisateurs (12) qui stocke une ID d'utilisateur présentant soit un mode enseignant, soit un mode étudiant pour chaque ordinateur de client ; le programme de synchronisation d'images mobiles commandant l'ordinateur serveur de relais ; et
un programme de synchronisation d'images mobiles stocké sur un dispositif de stockage, ledit programme de synchronisation d'images mobiles commandant ledit ordinateur serveur de relais pour exécuter :
une étape d'obtention des données web à partir de l'ordinateur serveur de contenu (20) ;
une étape de noyage d'un premier code de commande (C) ayant pour effet que les ordinateurs de client (30) affichent les images mobiles en reflétant une manipulation des mêmes images mobiles et d'un second code de commande (C) ayant pour effet que les ordinateurs de client (30) transmettent une manipulation des images mobiles audit ordinateur serveur de relais dans les données web obtenues ;
une étape d'envoi des données web sur chacun desdits ordinateurs de client (30) ; et
une étape de diffusion, lorsque la manipulation des images mobiles est reçue depuis l'un desdits ordinateurs de client avec une ID d'utilisateur qui présente un mode enseignant, de la même manipulation sur tous lesdits ordinateurs de client.

12. Système selon la revendication 11, ledit second code de commande (C) qui est inclus dans lesdites données web ayant pour effet que ledit ordinateur de client de mode enseignant (30) génère, lorsqu'une première manipulation sélectionnée à partir d'un groupe constitué par une relecture, un arrêt, une pause, une avance rapide et un rebobinage des images mobiles est réalisée au niveau du même ordinateur de client, une première information de manipulation indiquant la première manipulation et envoie celle-ci sur ledit ordinateur serveur de relais (10) afin de faire en sorte que le même ordinateur serveur de relais diffuse la première information de manipulation sur tous lesdits ordinateurs de client (30) afin de faire en sorte que chacun desdits ordinateurs de client affiche les images mobiles en reflétant la première manipulation indiquée par la première information de manipulation en synchronisation avec celles de l'ordinateur de client d'envoi.

13. Système selon la revendication 11, ledit second code de commande (C) qui est inclus dans lesdites données web ayant pour effet que ledit ordinateur de client de mode enseignant génère, lorsqu'une seconde manipulation désignant une position d'une image de début à relire est réalisée au niveau du même ordinateur de client (30), une seconde information de manipulation indiquant la seconde manipulation et l'envoie sur ledit ordinateur serveur de relais (10) afin de faire en sorte que le même ordinateur serveur de relais diffuse la seconde information de manipulation sur tous lesdits ordinateurs de client afin de faire en sorte que chacun desdits ordinateurs de client affiche les images mobiles en reflétant la seconde manipulation indiquée par la seconde information de manipulation en synchronisation avec celles de l'ordinateur de client d'envoi.

14. Système selon la revendication 11, ledit second code de commande (C) qui est inclus dans lesdites données web ayant pour effet que ledit ordinateur de client de mode enseignant (30) génère, lorsqu'une troisième manipulation désignant l'implantation des images mobiles est réalisée au niveau du même ordinateur de client, une troisième information de manipulation indiquant la troisième manipulation et l'envoie sur ledit ordinateur serveur de relais (10) pour faire en sorte que le même ordinateur serveur de relais transmette la troisième information de manipulation à ceux sélectionnés parmi lesdits ordinateurs de client afin de faire en sorte que chacun des ordinateurs de client sélectionnés (30) affiche les images mobiles avec la troisième manipulation indiquée par la troisième information de manipulation.

15. Système selon la revendication 11, ledit premier code de commande (C) qui est inclus dans lesdites données web ayant pour effet que ledit ordinateur de client de mode enseignant (30) affiche les images mobiles avec une implantation par défaut qui est prescrite en relation avec un utilisateur du même ordinateur de client.
